# FASCICULE DE BREVET EUROPEEN

(11) **EP 0 872 635 B1**
(45) Date de publication et mention de la délivrance du brevet: **18.09.2002**
(21) Numéro de dépôt: 98400922.5
(22) Date de dépôt: 14.04.1998
(51) Int. Cl.: F02D 41/38, F02D 41/22, F02D 21/08

(54) **Dispositif de contrôle du fonctionnement d'un moteur Diesel notamment de véhicule automobile**
Vorrichtung zur Überwachung des Betriebs eines Dieselmotors, insbesondere eines Kraftfahrzeuges
Apparatus for monitoring the operations of a diesel engine, in particular for the engine of a vehicle

(30) Priorité: 16.04.1997 FR 9704697
(43) Date de publication de la demande: 21.10.1998
(73) Titulaire: AUTOMOBILES PEUGEOT, 75116 Paris (FR); AUTOMOBILES CITROEN, 92200 Neuilly-sur-Seine (FR)
(72) Inventeur: Gerault, Georges, 75017 Paris (FR); Follain, Luc, 78450 Villepreux (FR); Le Tallec, Patrice, 78500 Sartrouville (FR)
(74) Mandataire: Habasque, Etienne Joel Jean-François

(56) Documents cités:
- EP-A- 0 440 173
- DE-A- 19 548 279
- DE-C- 19 612 180
- PATENT ABSTRACTS OF JAPAN vol. 007, no. 230 (M-249), 12 octobre 1983 & JP 58 124028 A (NIPPON DENSO KK), 23 juillet 1983,

## Description

La présente invention concerne un dispositif de contrôle du fonctionnement d'un moteur Diesel notamment de véhicule automobile.

Plus particulièrement, l'invention se rapporte à un tel dispositif qui comporte des injecteurs de carburant dans les cylindres du moteur et au moins une vanne de recyclage des gaz d'échappement de celui-ci, dont le fonctionnement est piloté par un calculateur de contrôle du fonctionnement du moteur.

Il peut se produire pour une raison ou pour une autre que par exemple l'un des injecteurs soit défectueux et provoque des injections intempestives dans l'un des cylindres du moteur.

De telles injections intempestives peuvent provoquer des dégradations voire la casse du moteur.

On a déjà décrit par exemple dans la demande de brevet français n° 96 13 138 déposée le 28 octobre 1996 par les demanderesses, un dispositif de contrôle du fonctionnement d'un moteur Diesel notamment de véhicule automobile, qui permet d'analyser le fonctionnement d'un tel moteur pour détecter par exemple de telles injections. Cependant, le déclenchement d'une action de sauvegarde du moteur dans un tel cas est soumis à des réglementations qui interdisent aux constructeurs de véhicules par exemple de couper complètement le moteur, ce qui pourrait placer le conducteur du véhicule dans une situation délicate, lorsque par exemple celui-ci est en train de doubler un autre véhicule ou lorsqu'il circule dans un trafic intense.

Le document DE 196 12 180 C (SIEMENS AG) divulgue un dispositif de contrôle du fonctionnement d'un moteur Diesel notamment de véhicule automobile, du type comportant des injecteurs de carburant dans les cylindres de celui-ci, dont le fonctionnement est piloté par un calculateur de contrôle du fonctionnement du moteur, comportant des moyens de détection d'une injection intempestive de carburant dans un cylindre du moteur, reliés au calculateur de contrôle du fonctionnement de celui-ci inhibant le pilotage de l'injecteur correspondant afin de permettre un fonctionnement en mode dégradé du moteur.

Le but de l'invention est donc de résoudre ces problèmes.

A cet effet, l'invention a pour objet un dispositif de contrôle du fonctionnement d'un moteur Diesel notamment de véhicule automobile, du type comportant des injecteurs de carburant dans les cylindres de celui-ci et une vanne de recyclage des gaz d'échappement de celui-ci, dont le fonctionnement est piloté par un calculateur de contrôle du fonctionnement du moteur, caractérisé en ce qu'il comporte des moyens de détection d'une injection intempestive de carburant dans un cylindre du moteur, reliés au calculateur de contrôle du fonctionnement de celui-ci, pour inhiber le pilotage de l'injecteur correspondant et ouvrir la vanne de recyclage des gaz afin de permettre un fonctionnement en mode dégradé du moteur.

L'invention sera mieux comprise à l'aide de la description qui va suivre donnée uniquement à titre d'exemple et faite en se référant aux dessins annexés sur lesquels :

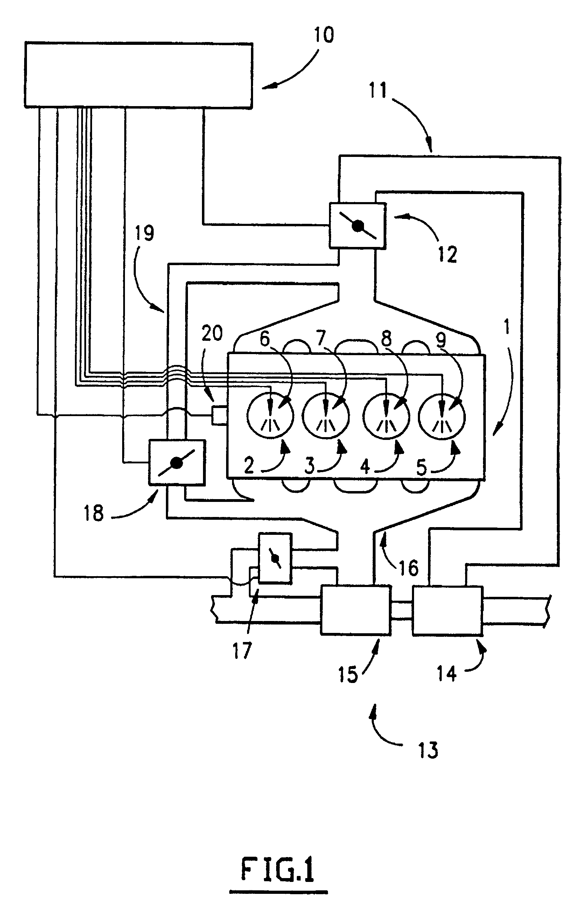

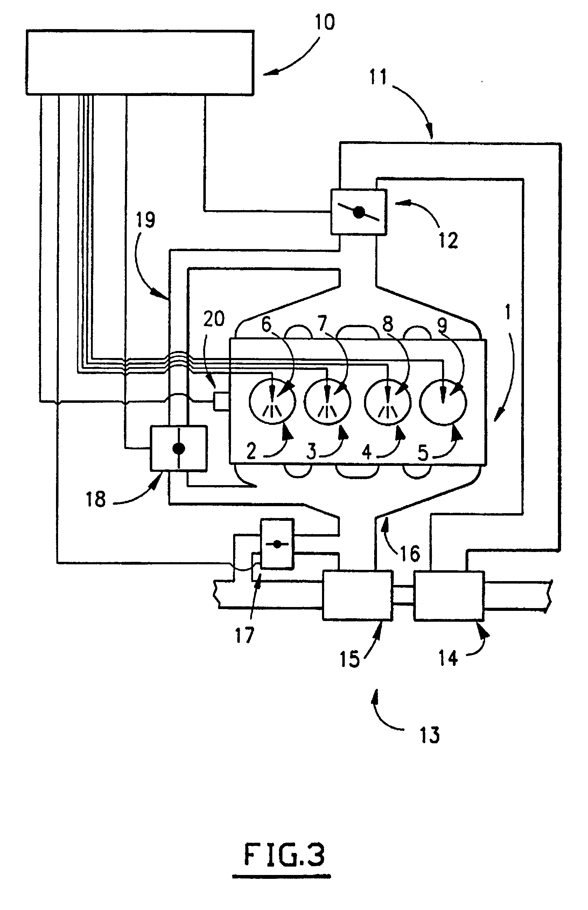

- les figures 1,2 et 3 représentent des schémas synoptiques illustrant la structure générale d'un moteur et d'un dispositif de contrôle selon l'invention, respectivement en fonctionnement normal, lors d'une injection intempestive de carburant, et en fonctionnement en mode dégradé.

On reconnaît en effet sur ces figures, un dispositif de contrôle du fonctionnement d'un moteur Diesel notamment de véhicule automobile, désigné par la référence générale 1 sur celles-ci, du type comportant des injecteurs de carburant dans les cylindres de celui-ci.

Dans l'exemple de réalisation représenté, le moteur est un moteur à quatre cylindres désignés par les références générales 2,3,4 et 5 sur ces figures, chaque cylindre étant associé à un injecteur de carburant désignés par les références 6,7,8 et 9 respectivement, et pilotés par exemple de façon électrique par un calculateur de contrôle du fonctionnement du moteur désigné par la référence générale 10 sur ces figures.

Il va de soi bien entendu qu'un moteur présentant un nombre de cylindres différent peut être envisagé.

D'un côté, ce moteur 1 est relié à des moyens d'arrivée de gaz frais, désignés par la référence générale 11 sur ces figures, dans lesquels peut être interposée une vanne de régulation de l'arrivée de gaz frais dans le moteur désignée par la référence générale 12 et qui peut également être commandée par le calculateur 10.

Ces moyens d'arrivée de gaz frais peuvent également être reliés à un turbocompresseur désigné par la référence générale 13 sur ces figures, et plus particulièrement à la portion de compresseur 14 de celui-ci, dont la portion de turbine désignée par la référence générale 15, est associée aux moyens de sortie des gaz d'échappement du moteur, désignés par la référence générale 16 sur ces figures.

Ce turbocompresseur 13 peut être associé à une vanne de décharge désignée par la référence générale 17 sur ces figures, cette vanne de décharge étant disposée en parallèle sur la turbine 15 du turbocompresseur 13, et pouvant également être pilotée par le calculateur 10.

Une vanne de recyclage des gaz d'échappement désignée par la référence générale 18 sur ces figures peut également être interposée entre les moyens de sortie de gaz d'échappement 16 et les moyens d'arrivée de gaz frais 11 dans le moteur, en étant interposée dans un conduit de recirculation désigné par la référence générale 19 sur ces figures.

Cette vanne de recyclage 18 peut également être pilotée par le calculateur.

Il va de soi bien entendu que tous les éléments qui viennent d'être décrits ne sont pas nécessaires et ne sont pas tous utilisés dans tous les moteurs Diesel.

D'une façon générale, les moteurs Diesel comportent une vanne 18 de recyclage des gaz d'échappement, cette vanne étant pilotée par le calculateur de manière à être plus ou moins ouverte.

Cependant, la vanne d'arrivée des gaz frais 12 n'existe pas sur tous les moteurs Diesel, cette vanne permettant de réguler le débit d'arrivée des gaz frais dans le moteur.

Bien entendu, tous les moteurs Diesel ne sont pas équipés d'un turbocompresseur permettant d'alimenter le moteur à une pression supérieure à la pression atmosphérique.

Certains moteurs sont également équipés de turbocompresseurs à géométrie variable qui sont pilotés pour permettre le réglage de la pression de suralimentation.

Selon l'invention, le dispositif de contrôle comporte également des moyens de détection d'une injection intempestive de carburant dans un cylindre du moteur, reliés au calculateur 10 de contrôle du fonctionnement de celui-ci, permettant à celui-ci d'enclencher une action de sauvegarde et un mode de fonctionnement dégradé de ce moteur.

De tels moyens de détection se présentent par exemple sous la forme d'un capteur de cliquetis placé sur le moteur et désigné par la référence générale 20 sur ces figures, ce capteur pouvant par exemple être analogue à celui décrit dans la demande de brevet mentionnée précédemment et étant relié au calculateur 10.

Sur la figure 1, on a représenté le fonctionnement normal d'un tel moteur et d'un tel dispositif.

Dans ce cas, les différents éléments qui viennent d'être décrits sont pilotés de manière à obtenir un fonctionnement optimal du moteur, par le calculateur.

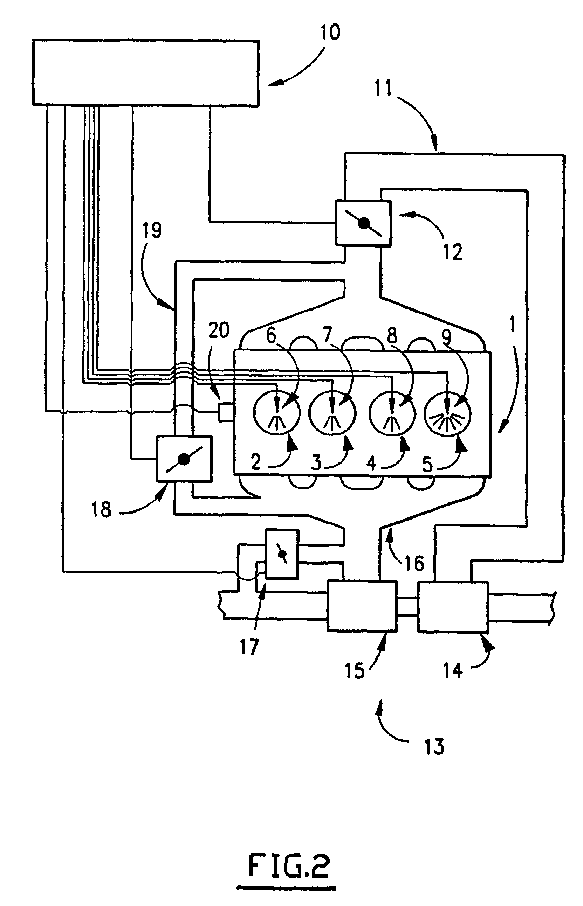

Lorsqu'il se produit une injection intempestive de carburant dans l'un des cylindres du moteur, comme par exemple dans le cylindre 5 comme cela est représenté sur la figure 2, le capteur 20 détecte cette injection et transmet une information correspondante au calculateur 10 de contrôle du fonctionnement du moteur.

Celui-ci est alors adapté pour enclencher une action de sauvegarde du moteur et une stratégie de passage de celui-ci en mode de fonctionnement dégradé, dans lequel le calculateur 10 inhibe tout pilotage de l'injecteur correspondant, tel que par exemple l'injecteur 9 associé au cylindre 5, dans lequel s'est produite une injection intempestive de carburant, et ouvre la vanne de recyclage des gaz d'échappement désignée par la référence générale 18, afin de permettre un fonctionnement en mode dégradé du moteur.

En effet, en recyclant tous les gaz d'échappement du moteur, les gaz arrivant à l'entrée de celui-ci comportent donc moins d'oxygène de sorte que le moteur a tendance à s'étouffer.

Le conducteur du véhicule peut alors s'arrêter dans des conditions de sécurité normales ce qui n'aurait pas été le cas si le moteur avait été complètement coupé.

Dans le cas où le moteur est équipé d'une vanne de régulation de l'arrivée de gaz frais telle que la vanne 12 décrite précédemment, le calculateur 10 peut également être adapté pour fermer celle-ci pour augmenter encore l'étouffement du moteur.

Si le moteur 1 est équipé d'un turbocompresseur et d'une vanne de décharge de celui-ci telle que la vanne 17 décrite sur ces figures, le calculateur 10 peut également être adapté pour piloter cette vanne à l'ouverture afin de réduire la pression de suralimentation du moteur.

Dans le cas où le turbocompresseur est un turbocompresseur 13 à géométrie variable, celui-ci peut également être piloté de manière à réduire cette pression de suralimentation.

On conçoit alors que, en fonction du degré d'équipement du moteur, on peut agir au moins sur la vanne de recyclage des gaz d'échappement 18 de celui-ci et éventuellement sur d'autres éléments complémentaires, tels que par exemple la vanne de régulation de l'arrivée de gaz frais 12 dans le moteur, le turbocompresseur 13 et la vanne de décharge 17 de celui-ci, afin d'amener le moteur à fonctionner dans un mode dégradé, en provoquant un étouffement de celui-ci, ce qui permet d'éviter la coupure totale immédiate du moteur afin d'éviter de placer le conducteur du véhicule dans une situation délicate.

## Revendications

1. Dispositif de contrôle du fonctionnement d'un moteur Diesel (1) notamment de véhicule automobile, du type comportant des injecteurs de carburant (6,7,8,9) dans les cylindres (2,3,4,5) de celui-ci et une vanne de recyclage (18) des gaz d'échappement de celui-ci, dont le fonctionnement est piloté par un calculateur (10) de contrôle du fonctionnement du moteur, **caractérisé en ce qu'**il comporte des moyens (20) de détection d'une injection intempestive de carburant dans un cylindre du moteur, reliés au calculateur (10) de contrôle du fonctionnement de celui-ci, inhibant le pilotage de l'injecteur correspondant et ouvrant la vanne (18) de recyclage des gaz d'échappement afin de permettre un fonctionnement en mode dégradé du moteur.

2. Dispositif de contrôle selon la revendication 1, **caractérisé en ce qu'**il comporte une vanne (12) de régulation de l'arrivée de gaz frais dans le moteur (1) et **en ce que** le calculateur (10) est adapté pour fermer cette vanne en cas de détection d'une injection intempestive.

3. Dispositif de contrôle selon la revendication 1 ou 2, **caractérisé en ce que** le moteur est équipé d'un turbocompresseur (13) et **en ce que** le calculateur (10) est adapté pour commander une réduction de la pression de suralimentation du moteur en cas de détection d'une injection intempestive.

4. Dispositif de contrôle selon la revendication 3, **caractérisé en ce que** le turbocompresseur (13) est équipé d'une vanne de décharge (17) et **en ce que** le calculateur (10) est adapté pour ouvrir cette vanne de décharge (17) afin de réduire la pression de suralimentation du moteur.

5. Dispositif de contrôle selon la revendication 3 ou 4, **caractérisé en ce que** le turbocompresseur (13) est un turbocompresseur à géométrie variable et **en ce que** le calculateur (10) est adapté pour piloter celui-ci afin de réduire la pression de suralimentation du moteur.

6. Dispositif de contrôle selon l'une quelconque des revendications précédentes, **caractérisé en ce que** les moyens de détection d'une injection intempestive de carburant comprennent un capteur de cliquetis (20) placé sur le moteur (1).

## Patentansprüche

1. Vorrichtung für die Steuerung des Betriebs eines Dieselmotors (1), insbesondere für Kraftfahrzeuge, wobei die Vorrichtung von dem Typ ist, der Einrichtungen (6, 7, 8, 9) zum Einspritzen von Kraftstoff in die Zylinder (2, 3, 4, 5) des Motors sowie eine Rückführungsklappe (18) für die Abgase des Motors umfaßt, wobei der Motorbetrieb durch einen Motorbetrieb-Steuerrechner (10) gesteuert wird, **gekennzeichnet durch** Mittel (20) für die Erfassung einer ungeeigneten Einspritzung von Kraftstoff in einen Zylinder des Motors, die mit dem Motorbetrieb-Steuerrechner (10) verbunden sind, die Steuerung der entsprechenden Einspritzeinrichtung sperren und die Abgasrückführungsklappe öffnen, um einen verminderten Betrieb des Motors zu ermöglichen.

2. Steuervorrichtung nach Anspruch 1, **dadurch gekennzeichnet, daß** sie eine Klappe (12) für die Regulierung der Ankunft von frischem Gas im Motor (1) umfaßt und daß der Rechner (2) diese Klappe bei Erfassung einer ungeeigneten Einspritzung schließen kann.

3. Steuervorrichtung nach Anspruch 1 oder 2, **dadurch gekennzeichnet, daß** der Motor mit einem Turbokompressor (13) ausgerüstet ist und daß der Rechner (10) eine Verringerung des Ladedrucks des Motors bei Erfassung einer ungeeigneten Einspritzung anweisen kann.

4. Steuervorrichtung nach Anspruch 3, **dadurch gekennzeichnet, daß** der Turbokompressor (13) mit einer Auslaßklappe (17) ausgerüstet ist und daß der Rechner (10) diese Auslaßklappe (17) öffnen kann, um den Ladedruck des Motors zu verringern.

5. Steuervorrichtung nach Anspruch 3 oder 4, **dadurch gekennzeichnet, daß** der Turbokompressor (13) ein Turbokompressor mit variabler Geometrie ist und daß der Rechner (10) diese steuern kann, um den Ladedruck des Motors zu verringern.

6. Steuervorrichtung nach einem der vorhergehenden Ansprüche, **dadurch gekennzeichnet, daß** die Mittel für die Erfassung einer ungeeigneten Einspritzung von Kraftstoff einen am Motor angeordneten Klopfsensor (20) umfassen.

## Claims

1. Apparatus for supervising the operation of a Diesel engine (1), especially of an automobile, of the type comprising fuel injectors (6, 7, 8, 9) for the cylinders (2, 3, 4, 5) thereof and a recycling valve (18) for the exhaust gas thereof, whose operation is controlled by a computer (10) for supervising the operation of the engine, **characterized in that** it comprises means (20) for detecting a wrongly timed injection of fuel into a cylinder of the engine, connected to the computer (10) supervising the operation thereof, inhibiting the control of the corresponding injector and opening the exhaust gas recycling valve (18) in order to enable operation of the engine in a degraded mode.

2. Supervising apparatus according to claim 1, **characterized in that** it comprises a valve (12) regulating the supply of fresh gas to the engine (1) and **in that** the computer (10) is adapted to close this valve in the case of detection of a wrongly timed injection.

3. Supervising apparatus according to claim 1 or 2, **characterized in that** the engine is provided with a turbo-compressor (13) and **in that** the computer (10) is adapted to impose a reduction in the supercharging pressure of the engine in the case of detection of a wrongly timed injection.

4. Supervising apparatus according to claim 3, **characterized in that** the turbo-compressor (13) is provided with a relief valve (17) and **in that** the computer (10) is adapted to open this relief valve (17) in order to reduce the supercharging pressure of the engine.

5. Supervising apparatus according to claim 3 or 4, **characterized in that** the turbo-compressor (13) is a turbo-compressor with variable geometry and **in that** the computer (10) is adapted to control this in order to reduce the supercharging pressure of the engine.

6. Supervising apparatus according to any of the preceding claims, **characterized in that** the means for detection of a wrongly timed injection of fuel comprise a knock sensor (20) located on the engine (1).
